# EUROPEAN PATENT APPLICATION

(11) **EP 2 127 999 A2**
(43) Date of publication of application: **02.12.2009**
(21) Application number: 09156547.3
(22) Date of filing: 27.03.2009
(51) Int. Cl.: B62D 13/06, B62D 15/02

(54) **System for assisting a driver while manoeuvring a truck towards a loading or unloading bay**

(30) Priority: 30.05.2008 IT TO20080419
(71) Applicant: System Truck S.r.l., 41058 Vignola (MO) (IT)
(72) Inventor: Veronesi, Vittorio, 41058 Vignola (IT)
(74) Representative: Jorio, Paolo

(57) **Abstract**

A system (1) for assisting a driver while manoeuvring a truck (2) towards a loading or unloading bay (8) is described, comprising a first sensor (11) suitable to measure a first dimension associated with the value of the first distance of a first point (12) of a tail end (6) with respect to the bay (8) and a second sensor (13) suitable to measure a second dimension associated with the value of a second distance of a second point (14), different from the first point (12), of the tail end (6) with respect to the bay (8); the system (1) also comprises processing means (20) suitable to receive the values of the first and of the second dimension, and to generate a first signal if the first distance is greater than the second distance; the processing means (20) are suitable to generate a second signal, different from the first signal, if the second distance is greater than the first distance.

## Description

The present invention relates to a system for assisting a driver while manoeuvring a truck towards a fixed loading or unloading bay.

In the transport sector the use of trucks to collect a variety of goods from a loading station, carry such goods along a road and make such goods available at an unloading bay is known in the prior art.

In more detail, the trucks of the type known in the prior art comprise a truck tractor having a cab and a semi-trailer provided with a loading floor and arranged behind the truck tractor, with reference to a normal direction of travel of the truck.

In order to unload the goods on the unloading bay, the truck is reversed up to a horizontal surface defined by said unloading bay until the tail end of the semi-trailer comes completely up against said horizontal surface. At this stage, when a rear door of the trailer is opened, the loading floor of the semi-trailer and the horizontal surface of the unloading bay are contiguous and coplanar. The goods can thus be conveniently unloaded using forklift trucks, which move on the loading floor and on the horizontal surface.

While reversing the truck towards the unloading bay, the driver uses the rear-view mirrors in order to arrange the tail end of the truck so that it comes up completely against the surface of the unloading bay.

Said manoeuvre is difficult in that the driver is frequently unable to judge the exact distance between the tail end of the truck and the unloading bay. In that case, approaching the unloading bay involves several attempts and thus becomes a lengthy operation.

Moreover, the driver is frequently unable to arrange the tail end of the truck so that it comes completely up against the surface of the unloading bay. In the latter case, the tail end is arranged obliquely with respect to the surface and the driver must repeat the approach to the unloading bay.

Also in this case, approaching the bay involves several attempts and thus becomes a lengthy operation.

In the sector the need is felt to make the approach as easy, fast and repeatable as possible.

The object of the present invention is to produce a system to assist the correct positioning of a truck, which satisfies the above need in a simple and inexpensive manner.

Said object is achieved with the present invention, which relates to a system for assisting a driver while manoeuvring a truck towards a loading or unloading bay, as claimed in claim 1.

In order to better understand the present invention, a non-limiting preferred embodiment thereof will now be described by way of example with reference to the accompanying drawings, in which:
- figure 1 illustrates a truck provided with a system for assisting a driver during approach operations according to the present invention;
- figures 2 and 3 illustrate the truck of figure 1 respectively in a correct and incorrect approach position with respect to an unloading bay; and
- figure 4 shows the truck of figures 1 to 3 provided with the assistance system according to the present invention, in a correct position with respect to the unloading bay.

With reference to the accompanying figures, number 1 indicates a system for assisting the positioning of a truck 2.

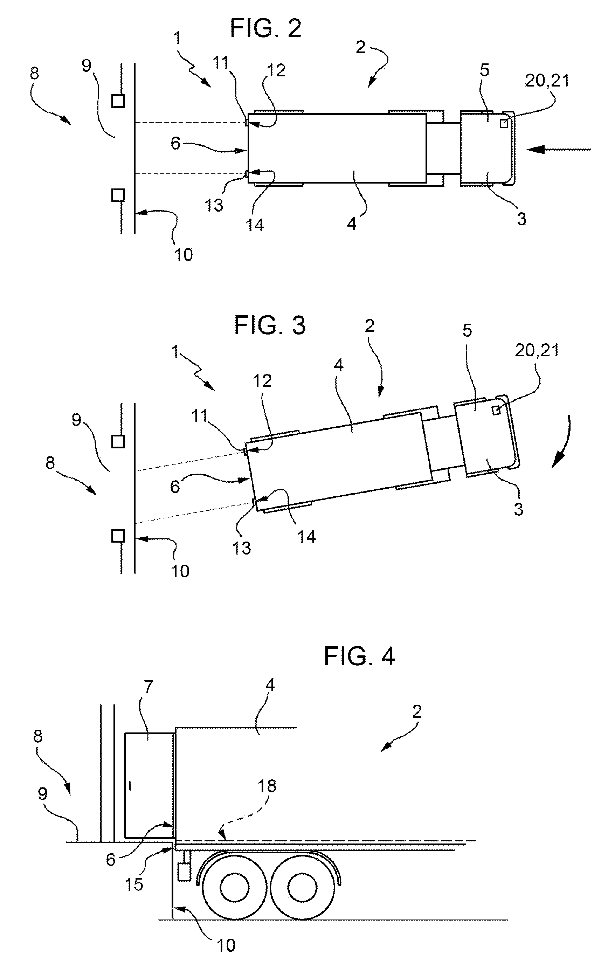

More in detail, the truck 2 comprises a truck tractor 3 and a semi-trailer 4 arranged behind the truck tractor 3 with reference to a normal direction of travel of the truck 2. The term normal direction of travel is used in the present description to mean a direction of travel in which the truck tractor 3 moves forward ahead of the semi-trailer 4. In particular the normal direction of travel is the direction opposite that indicated by the arrow in figure 2.

The truck tractor 3 comprises a cab 5 and the semi-trailer 4 comprises a horizontal loading floor 18 (figure 4).

The semi-trailer 4 also comprises a rear door 7 arranged in correspondence with a tail end 6 of the truck arranged to the rear with reference to the normal direction of travel of the truck 2.

In particular, the system 1 is suitable to assist a driver while manoeuvring a truck to achieve the correct positioning of the tail end 6 with respect to an edge 10 of an unloading bay 8 (Figures 2 and 4).

The term manoeuvring to achieve the correct positioning refers to an operation, at the end of which a loading surface 9 of the bay 8 delimited, on the side of the truck 1, by the edge 10 is contiguous to a loading floor 18 of the semi-trailer 4 and the tail end 6 of the truck 2 is parallel with and comes completely up against the edge 10 of the surface 9.

Advantageously, the system 1 comprises:
- a first sensor 11 mounted on a point 12 of the tail end 6 and measuring a first dimension associated with the distance of said point 12 from the edge 10;
- a second sensor 13 mounted on a point 14, different from the point 12, of the tail end 6 and measuring a second dimension associated with the distance of the point 14 from the edge 10; and
- a processor 20 that receives the values of the first and of the second dimensions, and generates and outputs a first signal if the distance of the point 12 from the edge 10 is greater than the distance of the point 14 from the edge 10; the processor 20 generates a second signal, if the distance of the point 14 from the edge 10 is greater than the distance of the point 12 from the edge 10.

More in detail, the sensors 11, 13 are optical sensors that emit a radiation directed from the points 12, 14 towards the edge 10 and receive said radiation reflected by said edge 10. The sensors 11, 13 detect the distances between the points 12, 14 and the edge 10 according to the interval of time between the instants in which the radiation is emitted and that in which the reflected radiation is received.

Preferably, the sensors 11, 13 emit an infrared radiation beam.

The sensors 11, 13 are preferably mounted on a cross-member 15 arranged in correspondence with the tail end 6 arranged below the rear door 7 of the semi-trailer 4.

The processor 20 can be selectively operated by the driver. The activation of the processor 20 also determines the activation of the sensors 11, 13.

The sensors 11, 13 transmit to the processor 20 a pair of signals associated with the value of the distances of the points 12, 14 from the edge 10. Preferably, the sensors 11, 13 transmit said signals to the processor 20 in a local wireless mode and, in particular, using a Wi-Fi protocol.

The term local wireless mode refers to the fact that the distance between the sensors 11, 13 and the processor 20 must be less than a previously defined value in order to enable the efficient transmission of said signals to the processor 20.

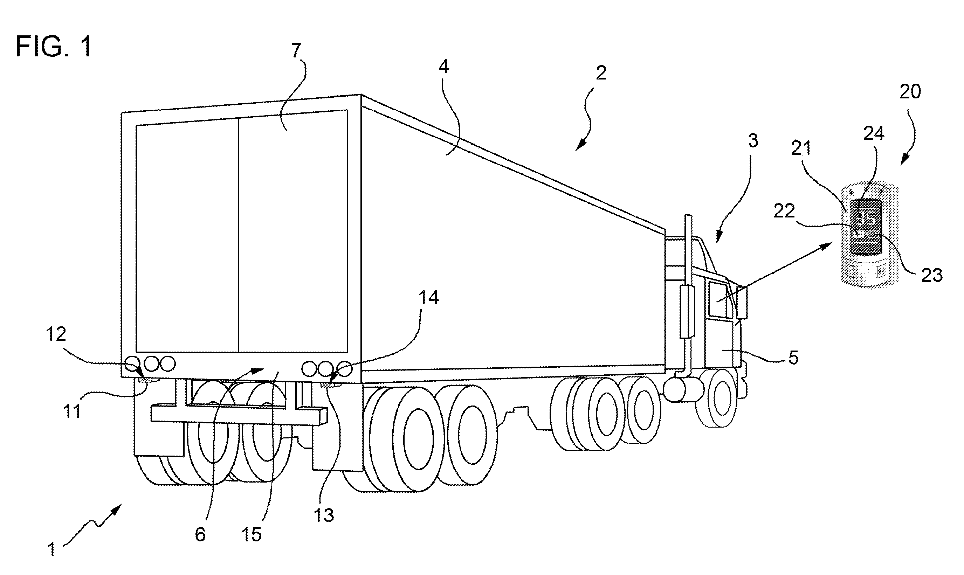

The system 1 also comprises a display unit 21 incorporated in the processor 20, housed in the cab 5, suitable to display a first or a second indication 22, 23 (figure 1) depending on whether the processor 20 generates respectively the first or the second signal.

In more detail, the indication 22 tells the driver to turn the steering-wheel in a first direction (shown in figure 3) to move the point 14 towards the edge 10 more than the point 12.

The indication 23 tells the driver to turn the steering-wheel in a second direction, opposite to the first, to move the point 12 towards the edge 10 more than the point 14.

The display unit 21 also displays a third indication 24 showing the minimum value between the distances of the points 12, 14 from the edge. The driver can thus easily know the how far the tail end 6 is from the edge 10 as the truck approaches said edge 10.

The display unit 21 displays a fourth indication (not shown in the attached figures) when the distances between the points 12, 14 and the edge 10 are equal. Said fourth indication tells the driver that the tail end 6 is parallel with the edge 10 and that he can simply proceed in reverse without turning the steering-wheel to arrange the tail end 6 in the correct position with respect to the bay 8.

Lastly, the display unit 21 displays a fifth indication (not shown in the attached figures) when the tail end 6 is up against the edge 10, i.e. when the distances between the points 12, 14 and the edge 10 are zero. In this way, the driver is informed of the fact that the loading floor 18 of the semi-trailer 4 is contiguous and coplanar with the surface 9.

The processor 20 and the sensors 11, 13 are preferably powered by batteries of the type commonly used in the prior art.

In use, the driver performs the approach operation by travelling towards the bay 8 in reverse.

The sensors 11, 13 detect the distance of the points 12, 14 from the edge 10 and transmit this data to the receiver 20.

In the case illustrated in figure 3, the distance of the point 12 from the edge 10 is less than the distance of the point 14 from said edge 10. The processor 20 therefore generates the second signal and the display unit 21 displays the indication 23. The driver turns the steering-wheel in order to turn the truck 2 in the direction shown in figure 3. The point 14 thus moves towards the edge 10 more than the point 12 moves towards said edge 10.

Otherwise, if the distance of the point 14 from the edge 10 is less than the distance of the point 12 from said edge 10, the processor 20 generates the first signal and the display unit 21 displays the indication 22. In that case, the driver uses the steering-wheel to turn the truck 2 in the direction opposite to that indicated in figure 3. He therefore turns the steering-wheel so that the point 12 moves towards the edge 10 more than the point 14 of the tail end 6.

The driver stops turning the steering-wheel when the display unit 21 displays the fourth indication.

At this point, the tail end 6 is parallel with the edge 10 (Figure 2) and the driver reverses the truck towards said edge 10, observing the indication 24 on the display unit 21 in order to know the distance between the tail end 6 and the edge 10 as this gradually decreases.

Once the tail end 6 is parallel with the edge 10 and up against said edge 10 (Figure 4), the display unit 21 displays the fifth indication.

At this point, the driver stops the truck, the rear door 7 is opened and the goods can be conveniently unloaded.

The advantages that can be achieved with the system 1 according to the present invention are apparent from an examination of the characteristics thereof.

In particular, the system 1 enables the driver to approach the edge 10 of the bay 8 in reverse, without having to keep looking in the rear-view mirrors.

The indications 22, 23 concerning the direction of any steering operations to be performed by the driver in order to place the tail end 6 parallel with the edge 10 of the bay 8 are displayed continuously on the display unit 21.

At the same time, the indication 24 relating to the distance of the tail end 6 from the edge 10 of the bay 8 and the indication relating to the fact that the tail end 6 is parallel with and up against the edge 10 of the bay 8 are displayed continuously and progressively on the display unit 21.

Thanks to said indications, the operations involved in order to approach the bay 8 are made easy, repeatable and faster compared to the conventional solutions known in the prior art described at the beginning of this description.

Lastly, the system 1 can also be applied effectively when the semi-trailer 4 is coupled to different cabs 5.

In that case, the sensors 11, 13 must simply be mounted on the semi-trailer 4, the semi-trailer 4 must be coupled to another cab 5, and the processor 20 must be moved into the different cab 5.

Lastly, it is clear that modifications and variations may be made to the system 1 described and illustrated herein without departing from the scope of the present invention as set forth in the appended claims.

In particular, the sensors 11, 13 could be mounted in respective points at a distance from the tail end 6.

Moreover, the system 1 could be provided with additional sensors to control other operating features of the truck 1, for instance to verify the open or closed status of the doors of the cab 5. In that case, the display unit 21 would display additional information associated with said other operating features.

## Claims

1. System (1) for assisting a driver while manoeuvring a truck (2) towards a loading or unloading bay (8), **characterized in that** it comprises:
- a first sensor (11) suitable to measure a first dimension associated with the value of the first distance of a first point (12) of a tail end (6) of said truck (2) with respect to said bay (8);
- a second sensor (13) suitable to measure a second dimension associated with the value of a second distance of a second point (14) of said truck (2), different from said first point (12), of said tail end (6) with respect to said bay (8); and
- processing means (20) suitable to receive the values of said first and second dimensions, and to generate a first signal if said first distance is greater than said second distance; said processing means (20) being suitable to generate a second signal, different from said first signal, if said second distance is greater than said first distance.

2. System according to claim 1, **characterized in that** said processing means (20) comprise a display unit (21) to display a first and a second indication (22, 23); the first or the second indication (22, 23) being displayed when said processing means (20) generate respectively said first or said second signal.

3. System according to claim 2, **characterized in that** said display unit (21) displays a third indication (24) representing the minimum value between said first and second distances.

4. System according to claim 2 or 3, **characterized in that** said display unit (21) displays a fourth indication (21), when both of said first and second distances are zero.

5. System according to any one of the previous claims, **characterized in that** said processing means (20) can be selectively operated.

6. System according to claim 5, **characterized in that** the activation of said processing means (20) determines the activation of said first and second sensors (11, 13).

7. System according to any one of the previous claims, **characterised in that** said processing means (20) are connected to said first and second sensors (11, 13) via a local wireless connection.

8. System according to claim 7, **characterized in that** said wireless connection uses a Wi-Fi protocol.

9. System according to any one of the previous claims, **characterised in that** at least one of said first and second sensors (11, 13) is an optical sensor.

10. Truck (2) comprising a cab (5), said tail end (6), a loading floor (18) arranged between said cab (5) and said tail end (6), and a system (1) according to any one of the previous claims, **characterized in that** said first and second sensors (11, 13) are mounted on said tail end (6).

11. Truck according to claim 10, when dependent on claim 2, **characterized in that** said display unit (21) is housed inside said cab (5).

12. Truck according to claim 10 or 11, **characterized in that** said loading floor (18) is delimited, in correspondence with said tail end (6), by a cross-member (15); said first and second sensors (11, 13) being mounted on said cross-member (15).
